# EUROPÄISCHE PATENTSCHRIFT

(11) **EP 2 147 590 B1**
(45) Veröffentlichungstag und Bekanntmachung des Hinweises auf die Patenterteilung: **28.12.2011**
(21) Anmeldenummer: 08161105.5
(22) Anmeldetag: 24.07.2008
(51) Int. Cl.: A01D 89/00, A01D 57/02

(54) **Gutaufnehmer mit einer von der Drehrichtung abhängigen Stellung der Zinkenträger**
Goods picker with tooth holder position dependant on swivel direction
Dispositif de réception de marchandises dont la position du porte-dents dépend du sens de rotation

(43) Veröffentlichungstag der Anmeldung: 27.01.2010
(73) Patentinhaber: Maschinenfabrik Kemper GmbH & Co. KG, 48703 Stadtlohn (DE)
(72) Erfinder: Josset, Etienne, 70100 Arc les Gray (FR)
(74) Vertreter: Holst, Sönke

(56) Entgegenhaltungen:
- DE-A1-102005 020 463
- DE-C1- 4 425 142
- US-A1- 2005 284 124

## Beschreibung

Die Erfindung betrifft einen Gutaufnehmer mit:
einem Aufnehmerrotor, der mehrere entlang einer Kreisbahn bewegbare, um ihre Längsachse drehbar abgestützte Zinkenträger mit daran befestigten Zinken umfasst,
einem den Aufnehmerrotor enthaltenden Gehäuse mit Abstreifern, zwischen denen langgestreckte Zwischenräume verbleiben, durch die sich die radial äußeren Bereiche der Zinken über einen Teil der Kreisbahn der Zinkenträger nach außen erstrecken,
und einer in zwei Drehrichtungen drehbar antreibbaren Antriebswelle zum Antrieb der Zinkenträger auf der Kreisbahn.

### Stand der Technik

Gutaufnehmer werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Gutaufnehmer umfassen üblicherweise an sich quer zur Vorwärtsrichtung erstreckenden Zinkenträgern angebrachte Zinken. Die Zinkenträger werden in Bewegung versetzt, indem ein sie abstützender Halter in Rotation versetzt wird. Die Zinken erstrecken sich durch Zwischenräume, die zwischen am Rahmen des Gutaufnehmers angebrachten Abstreifern verbleiben, nach außen und bewegen sich entlang dieser Zwischenräume. Die Zinkenträger können durch Kurven- oder Nockenbahnen gesteuert werden (US 2 388 212 A), so dass sich die Winkelstellung der Zinkenträger während des Umlaufs ändert, um das Erntegut möglichst aggressiv annehmen zu können und sich am Abgabepunkt in den Innenraum der Abstreifer zurückziehen zu können, oder sie sind ungesteuert, d. h. starr mit dem Halter verbunden (EP 0 903 077 A).

Nach einem Gutstau ist es wünschenswert, den Gutaufnehmer zu reversieren, d. h. in einer gegenüber der Erntegutaufnahme umgekehrten Richtung anzutreiben. Übliche Gutaufnehmer lassen sich jedoch nicht reversieren, da sich die Zinken am Gehäuse verhaken würden. Die DE 10 2005 020 463 A schlägt vor, im rückwärtigen Bereich der Zinken eine Leiteinrichtung vorzusehen, die die Zinken bei einem Reversieren des Aufnahmerotors in die Zwischenräume zwischen den Abstreifern leitet. Problematisch ist hierbei die Wahl des Winkels der Zinken am Abgabepunkt des Ernteguts, der beim Fördern möglichst groß, zum Reversieren aber möglichst klein sein sollte. Analog ergeben sich beim Reversieren mitunter Probleme beim Eintritt der Zinken am rückwärtigen, unteren Ende des Gehäuses, da dort eine möglichst senkrechte Orientierung der Zinken zu den Abstreifern wünschenswert ist. Ein derartiger Winkel ist aber beim Erntebetrieb nicht optimal.

Die DE 44 25 142 C beschreibt einen Trommelförderer mit einer zu seiner Drehachse exzentrisch gelagerten Welle, auf der mehrere Finger gelagert sind, die sich durch zugeordnete Öffnungen in der Trommel erstrecken. Die Trommel wird rotativ angetrieben. Da die Welle in einem Drehbereich frei drehbar gelagert ist, bewegt sie sich aufgrund der auf die Finger wirkenden Kraft zwischen zwei Endstellungen. Dadurch erreicht man, dass die Kurbelwelle bei einer ersten Drehrichtung der Trommel in ihre eine Endstellung gelangt und die Finger relativ weit aus dem Gehäuse herausragen und das Erntegut aktiv fördern. Wird die Trommel reversiert, dreht sich die Kurbelwelle in ihre andere Endstellung, und die Finger fördern aktiv die Abförderung des Ernteguts.

### Aufgabe

Das der Erfindung zu Grunde liegende Problem wird darin gesehen, einen Gutaufnehmer mit einem reversierbaren Aufnehmerrotor bereitzustellen, der sich problemlos reversieren lässt und dennoch eine geeignete Winkelstellung der Zinken im Förder- und Reversierbetrieb ermöglicht.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Ein Gutaufnehmer umfasst einen Aufnehmerrotor mit mehreren Zinkenträgern, die winkelversetzt entlang einer Kreisbahn beweglich sind und jeweils mehrere Zinken haltern. Der Aufnehmerrotor ist innerhalb eines Gehäuses angeordnet, das an seiner in Vorwärtsrichtung des Gutaufnehmers vorderen Seite mehrere Abstreifer ausweist, zwischen denen langgestreckte Zwischenräume verbleiben, durch die sich die Zinken erstrecken, deren Zinkenträger sich in ihrem vorderen Teil ihrer Kreisbahn befinden. Eine Antriebswelle treibt die Zinkenträger wahlweise in einer ersten oder zweiten Drehrichtung an. Die Zinkenträger sind innerhalb eines begrenzten Winkelbereichs zwischen zwei Endstellungen um ihre Längsachsen schwenkbar gelagert. Sie werden abhängig von der Drehrichtung der Antriebswelle zwischen den Endstellungen bewegt.

Die Endstellungen entsprechen jeweils Winkeln der Zinkenträger, die sich bei der ersten Drehrichtung zum Fördern des Ernteguts eignen und in der zweiten Drehrichtung ein unproblematisches Reversieren des Aufnehmerrotors ermöglichen. Sie werden abhängig von der Drehrichtung der Antriebswelle angenommen, was auf verschiedene Arten erfolgen kann:

Bei einer Ausführungsform ist eine geeignete Mechanik zwischen der Antriebswelle und den Zinkenträgern vorhanden, die die Drehbewegung der Antriebswelle auf die Zinkenträger überträgt und letztere abhängig von der Drehrichtung in die gewünschte Stellung verbringt. Es kann auch ein separater Antrieb zum Verschwenken des Zinkenträgers abhängig von der Drehrichtung verwendet werden.

Die Zinkenträger sind bei einer anderen, bevorzugten Ausführungsform innerhalb des begrenzten Winkelbereichs zwischen den beiden Endstellungen um ihre Längsachsen frei schwenkbar gelagert und werden durch auf die Zinken wirkende Kräfte zwischen den Endstellungen bewegt. Auf diese Weise erreicht man, dass die Winkelstellung der Zinkenträger von der Drehrichtung der Antriebswelle abhängt, da die Trägheitskräfte und das mit den Zinken zusammenwirkende Erntegut die Zinkenträger jeweils entgegen der Drehrichtung nach hinten drehen.

Die Endstellungen können durch einen oder mehrere Nocken oder Anschläge realisiert werden, die direkt oder indirekt mit Halterungen verbunden sind, an denen die Zinkenträger drehbar gelagert und mit denen die Antriebswelle in Antriebsverbindung steht. Eine indirekte Verbindung kann man durch eine Anbringung der Nocken an einer mittigen, zwei Halterungen der Zinkenträger verbindenden Welle erzielen.

Es können weiterhin Mittel zur Verbindung der Zinkenträger untereinander vorgesehen sein, die ihre Drehbewegungen um die Längsachsen koppeln. Dazu kann ein frei drehbarer Kopplungsring vorgesehen sein, der durch ein Element mit den Zinkenträgern antriebsverbunden ist, das mit einem Schlitz oder Langloch im Kopplungsring zusammenwirkt. Das Element ist mit dem Zinkenträger verbunden oder Teil des Zinkenträgers. Beispielsweise kann als Element ein Stift Verwendung finden, der mit dem Schlitz oder Langloch im Kopplungsring zusammenwirkt. Auf diese Weise kann der Kopplungsring auch die Drehbewegung der Zinkenträger zumindest in einer Drehrichtung begrenzen.

Bei einer bevorzugten Ausführungsform fördert der Aufnehmerrotor in einer ersten, beim Erntebetrieb verwendeten Drehrichtung der Antriebswelle oberschlächtig. Dann sind die Zinken am oberen, rückwärtigen Ende der langgestreckten Zwischenräume zumindest näherungsweise senkrecht zu den dort liegenden Bereichen der Abstreifer orientiert. Bei der zweiten Drehrichtung der Antriebswelle sind die Zinken am unteren, rückwärtigen Ende der langgestreckten Zwischenräume zumindest näherungsweise senkrecht zu den dort liegenden Bereichen der Abstreifer orientiert. Dadurch ist beim Reversieren ein problemloser Eintritt der Zinken in das Gehäuse möglich, ohne Gefahr, dass sich Erntegut zwischen den Zinken und den Abstreifern verklemmt.

Der erfindungsgemäße Gutaufnehmer kann an beliebigen landwirtschaftlichen Erntemaschinen verwendet werden, beispielsweise Feldhäckslern, Ladewagen, Mähdreschern oder Ballenpressen.

### Ausführungsform

In den Zeichnungen sind drei nachfolgend näher beschriebene Ausführungsbeispiele der Erfindung dargestellt. Es zeigt:
Fig. 1 eine Seitenansicht eines Feldhäckslers mit einem Gutaufnehmer,
Fig. 2 eine perspektivische Ansicht eines Abschnitts des Gehäuses des Aufnehmerrotors des Gutaufnehmers mit den daran befestigten Zinken,
Fig. 3 eine perspektivische Ansicht einer ersten Ausführungsform des Aufnehmerrotors,
Fig. 4 eine Schnittzeichnung des Aufnehmerrotors in einer ersten Drehrichtung,.
Fig. 5 eine Schnittzeichnung des Aufnehmerrotors in einer zweiten Drehrichtung,
Fig. 6 eine Schnittzeichnung einer zweiten Ausführungsform eines Aufnehmerrotors,
Fig. 7 eine Ansicht des Kupplungsrings aus Figur 6, und
Fig. 8 eine Schnittzeichnung einer dritten Ausführungsform eines Aufnehmerrotors.

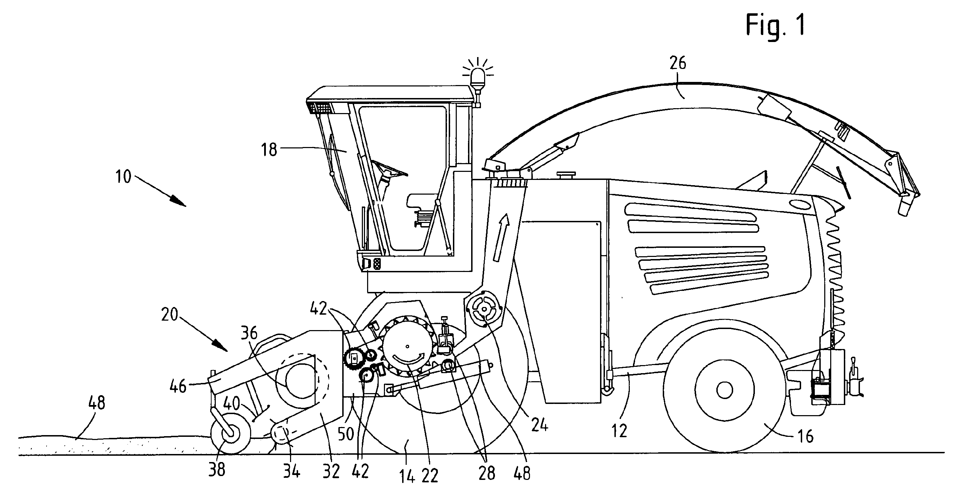

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form eines Gutaufnehmers 20 einsehbar ist. Mittels des Gutaufnehmers 20 vom Boden aufgenommenes Erntegut, z. B. Gras oder dergleichen, wird über einen Einzugsförderer 42 mit Vorpresswalzen, die innerhalb eines Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird.

Der Gutaufnehmer 20 ist als so genannte Pick-Up ausgebildet. Der Gutaufnehmer 20 baut sich auf einem Gehäuse 32 auf und stützt sich über beidseitig angebrachte Stützräder 38, die über je einen Träger 46 am Gehäuse 32 befestigt sind, auf dem Erdboden ab. Die Aufgabe des Gutaufnehmers 20 besteht darin, auf dem Boden eines Felds verstreut oder in einem Schwad 48 abgelegtes Erntegut aufzunehmen und es der Erntemaschine 10 zur weiteren Bearbeitung zuzuführen. Hierzu wird der Gutaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 50 und den daran befestigten Gutaufnehmer 20 um die Drehachse der Häckseltrommel 22 verschwenkt. Der Hydraulikzylinder 48 dient auch zur Einstellung der Höhe des Gutaufnehmers 20 über dem Boden, bzw. zur Einstellung des Auflagedrucks der Stützräder 38 auf dem Erdboden. Zum Gutaufnehmer 20 gehört ein Abgabeförderer 36 in Form einer Förderschnecke, die das aufgenommene Gut von den Seiten des Gutaufnehmers 20 zu einer in der Mitte gelegenen, nicht gezeigten Abgabeöffnung fördert, hinter der der Einzugsförderer 42 folgt. Der Gutaufnehmer 20 weist auch einen (wie der Abgabeförderer 36) rotativ angetriebenen Aufnehmerrotor 34 auf, der unterhalb des Abgabeförderers 36 angeordnet ist und mit seinen Zinken das Gut vom Erdboden anhebt, um es dem Abgabeförderer 36 zu übergeben. Außerdem ist ein Niederhalter 40 in Form eines über dem Aufnehmerrotor 34 angeordneten Bleches am Gehäuse 32 befestigt.

Im Folgenden beziehen sich Richtungsangaben, wie seitlich, unten und oben, auf die Vorwärtsbewegungsrichtung V des Gutaufnehmers 20, die in den Figuren nach links verläuft.

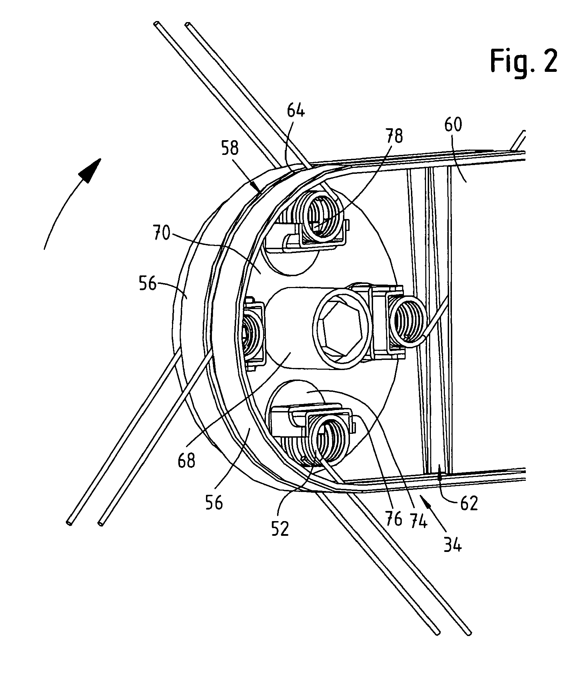

Der in der Figur 2 detaillierter dargestellte Aufnehmerrotor 34 umfasst eine zentrale, zylindrische Welle 68, die sich über die Breite des Gutaufnehmers 20 erstreckt und an ihren Enden am Gehäuse 32 des Gutaufnehmers 20 drehbar gelagert ist. Über die Länge der Welle 68 sind mehrere koaxial zur Welle 68 angeordnete, kreisförmige Halterungen 70 mit einer Vielzahl gleichmäßig um den Umfang der Welle 68 verteilter Bohrungen 72 befestigt, die parallel zur Welle 68 verlaufen. In den Bohrungen 72 sind Lagerungen 74 angeordnet. Axial durch die Lagerungen 74 erstrecken sich Schrauben, deren Gewinde in entsprechende Gewinde an den Enden U-förmiger Zinkenträger 76 eingeschraubt sind, die sich parallel zur Welle 68 erstrecken. Durch die Schrauben und die Lagerungen 74 sind die Zinkenträger 76 um ihre Längsachse drehbar an der Halterung 70 festgelegt. Es sind an der Halterung 70 vier Zinkenträger 76 angeordnet.

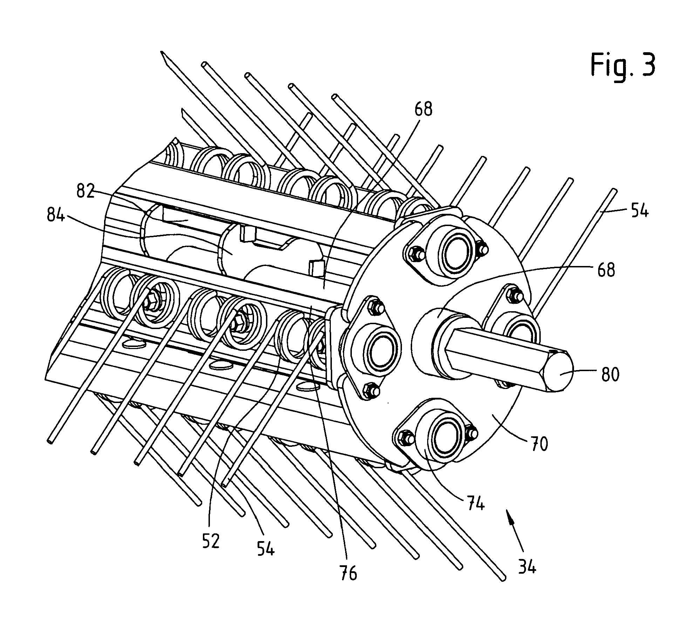

An den Zinkenträgern 76 sind die Zinken 54 befestigt, die aus federndem Material hergestellt sind und einen spiralförmigen Abschnitt 52 umfassen, der durch Schrauben 78 mit dem Zinkenträger 76 verbunden ist und an dessen Enden sich nach außen erstreckende Abschnitte vorgesehen sind. Die Zinken 54 erstrecken sich durch Zwischenräume 58, die zwischen mit dem Gehäuse 32 verbundenen Abstreifern 56 verbleiben und sind eingerichtet, Erntegut aufzunehmen und nach oben hinten zu fördern, wenn der Gutaufnehmer 20 über ein Feld bewegt wird. Dazu ist die Welle 68 mit einer Antriebswelle 80 (s. Figur 3) gekoppelt, die von der Erntemaschine 10 her angetrieben wird und sie in Drehung versetzt. Die Zinkenträger 76 mit den Zinken 54 werden über die Antriebswelle 80, die drehfest mit der Antriebswelle 80 verbundene Halterung 70, die andere über die Welle 68 mit der Antriebswelle 80 verbundene Halterung 70, und die Lagerungen 74 angetrieben, so dass sie sich um die Längsachse der Welle 68 drehen.

In einem bezüglich der Vorwärtsrichtung V rückwärts des Aufnehmerrotors 34 liegenden Bereich sind an diesen bzw. an die Abstreifer 56 angrenzend Leiteinrichtungen 60 vorgesehen. Diese Leiteinrichtungen 60 setzen sich aus einer Mehrzahl einzelner, sich etwa vertikal und in Vorwärtsrichtung erstreckender Leitbleche zusammen, die zwischen sich Führungsbahnen 62 bilden. Die Leiteinrichtungen 60 sind derart ausgerichtet, dass sich die von ihnen eingeschlossenen Führungsbahnen 62 in Richtung eines oberen, geöffneten Endbereichs 64 der Zwischenräume 58 zwischen den Abstreifern 56 verengen und in Richtung eines unteren, geöffneten Endbereichs 66 der Zwischenräume 58 erweitern. Die Leiteinrichtungen 60 tragen dazu bei, dass die Zinken 54 im Falle einer Reversierung des Aufnehmerrotors 34 geführt werden und in die Zwischenräume 58 zwischen den Abstreifern 56 eintreten, ohne zu verhaken.

Es wird nun auf die Figur 3 Bezug genommen, die eine erste Ausführungsform eines Aufnehmerrotors 34 zeigt und in der erkennbar, ist, dass die Welle 68 über die sechskantförmige Antriebswelle 80 antreibbar ist. Weiterhin ist ersichtlich, dass die Zinkenträger 76 gegenüber den Halterungen 70 um ihre Längsachsen frei drehbar sind, wobei der Drehbereich aber durch Nocken 82 auf einen Winkelbereich von etwa 90° eingeschränkt, d. h. zwischen zwei Endstellungen begrenzt ist. Die Nocken 82 sind an zwischen den Halterungen 70 mit der Welle 68 verbundenen, dazu konzentrischen Platten 84 angebracht.

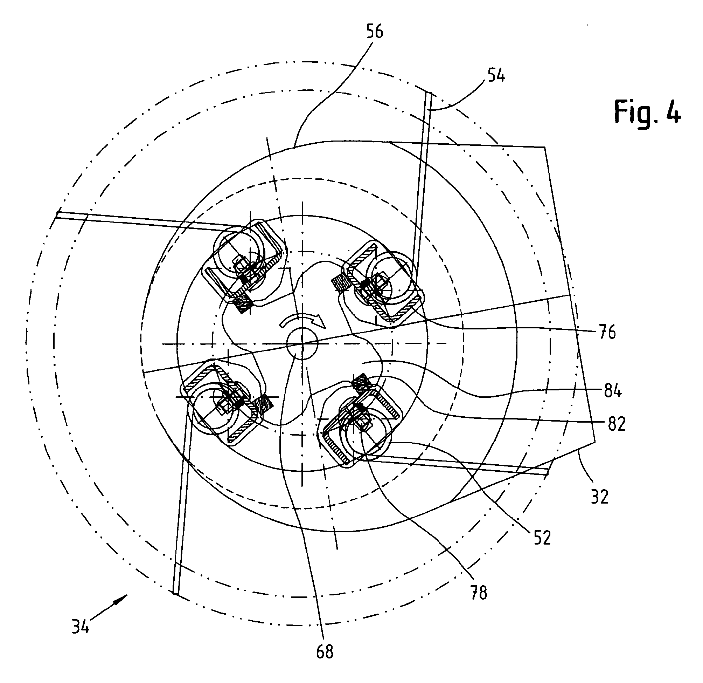

Beim normalen Erntebetrieb ergibt sich die in der Figur 4 dargestellte Situation. Die Antriebswelle 80 und die Welle 68 werden in einer ersten Drehrichtung (hier im Uhrzeigersinn) angetrieben. Die Zinkenträger 76 mit den Zinken 54 drehen sich aufgrund der Trägheitskräfte und des mit den Zinken 54 zusammenwirkenden Ernteguts entgegen der Drehrichtung der Welle 68 im Gegenuhrzeigersinn, bis die Zinkenträger 76 mit ihrer Basis an den Nocken 82 anliegen. Das Erntegut wird unproblematisch aufgenommen, oberschlächtig gefördert und wieder abgegeben, da die Zinken 54 am oberen, rückwärtigen Ende der langgestreckten Zwischenräume 58 näherungsweise senkrecht zu den dort liegenden Bereichen der Abstreifer 56 orientiert sind und das Erntegut nach hinten zum Abgabeförderer 36 hin schieben.

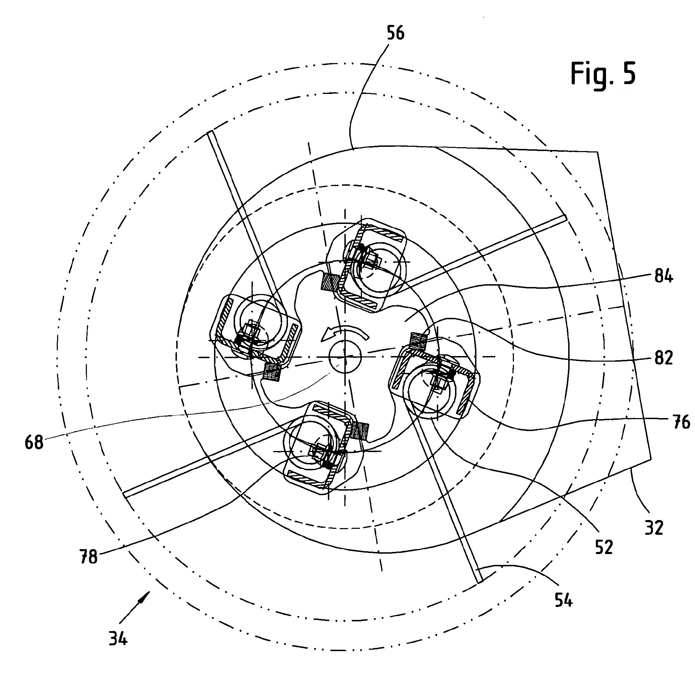

Wird der Aufnehmerrotor 34 des Gutaufnehmers 20 beispielsweise nach einer Verstopfung oder einem Nachweis eines eingedrungenen Fremdkörpers reversiert, ergibt sich die Situation nach Figur 5, in der die Antriebswelle 80 und die Welle 68 in ihrer zweiten Richtung angetrieben werden, im Gegenuhrzeigersinn. Ebenfalls aufgrund der Trägheit und des mit den Zinken 54 zusammenwirkenden Ernteguts drehen sich die Zinkenträger 76 gegensinnig zur Welle 68, bis sie mit der anderen Seite ihrer Basen als in Figur 4 an den Nocken 82 anliegen. In dieser Stellung ist das Reversieren der Zinken 54, insbesondere ihr problematischer Austritt aus dem Gehäuse 32, ohne Schwierigkeiten möglich, da die Zinken 54 bei der zweiten Drehrichtung der Welle 68 am oberen, rückwärtigen Ende der langgestreckten Zwischenräume 58 zumindest näherungsweise parallel zu den dort liegenden Bereichen der Abstreifer 56 orientiert sind. Außerdem sind die Zinken 54 bei der zweiten Drehrichtung der Welle 68 am unteren, rückwärtigen Ende der langgestreckten Zwischenräume 58 zumindest näherungsweise senkrecht zu den dort liegenden Bereichen der Abstreifer 56 orientiert, was das Eintreten der Zinken in das Gehäuse 32 erleichtert.

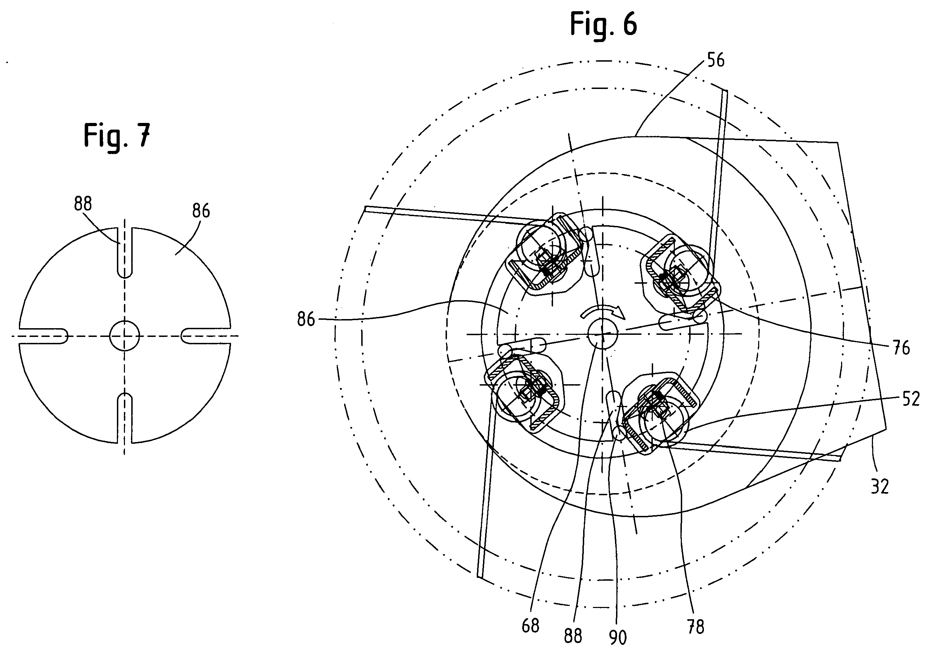

Die Figur 6 zeigt eine Schnittansicht durch eine zweite Ausführungsform eines Aufnehmerrotors 34. Mit der ersten Ausführungsform übereinstimmende Elemente sind mit denselben Bezugszeichen gekennzeichnet. Als wesentlicher Unterschied zur ersten Ausführungsform sind die Platten 84 mit den Nocken 82 entfallen und durch einen Kupplungsring 86 ersetzt worden, der frei drehbar auf der Welle 68 angeordnet ist. Im Kupplungsring 86 sind vier radiale Schlitze 88 vorgesehen, in die mit den Zinkenträgern 76 verbundene Stifte 90 eingreifen, die eine parallel zur Längsachse des Zinkenträgers 76 ausgerichtete Längsachse aufweisen. Die inneren Enden der Schlitze 88 begrenzen in der Figur 6 den Drehbereich der Zinkenträger 76 im Uhrzeigersinn, während der Drehbereich der Zinkenträger 76 im Gegenuhrzeigersinn durch beliebige andere Anschläge begrenzt werden kann, z. B. durch an der Halterung 70 angebrachte Anschläge (nicht gezeigt) oder indem die Schlitze 88 durch Langlöcher ersetzt werden. Die Funktion und die Positionen der Zinkenträger 76 beim Erntebetrieb und beim Reversieren entsprechen auch der ersten Ausführungsform, wobei in der zweiten Ausführungsform jedoch die Drehbewegung der Zinkenträger 76 durch den Kupplungsring 86 untereinander übertragen und somit synchronisiert wird.

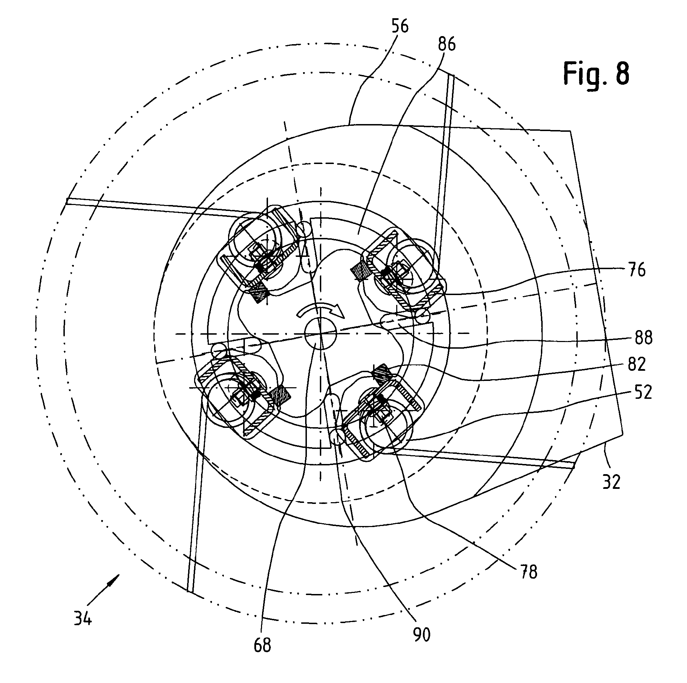

Es sei angemerkt, dass die erste und zweite Ausführungsform auch miteinander kombiniert werden können, so dass sich die in der Figur 8 dargestellte dritte Ausführungsform ergibt. Dann begrenzen die an der Platte 84 angebrachten Nocken 82 der ersten Ausführungsform die Drehbewegung der Zinkenträger 76, während der zusätzlich vorgesehene, frei drehbare und mit den Stiften 90 zusammenwirkende Kopplungsring 86 der zweiten Ausführungsform lediglich dazu dient, die Drehbewegungen der Zinkenträger 76 zu synchronisieren.

Es wäre bei der ersten Ausführungsform weiterhin möglich, nur die Halter 70 mit der Antriebswelle 80 anzutreiben, während die Welle 68 gegenüber den Haltern 70 frei drehen kann. Dadurch würde die Ausrichtung der Zinkenträger 76 zwangsweise durch die Drehrichtung der Halter 70 vorgegeben. Die beiden Halter 70 an den Enden der Zinkenträger 76 könnten hierbei durch eine Hohlwelle (nicht gezeigt) verbunden werden, oder die Platten 84 werden frei drehbar auf der Welle 68 gelagert, die dann die beiden Halter 70 an den Enden der Zinkenträger 76 untereinander verbindet.

## Patentansprüche

1. Gutaufnehmer (20) mit:
einem Aufnehmerrotor (34), der mehrere entlang einer Kreisbahn bewegbare, um ihre Längsachse drehbar abgestützte Zinkenträger (76) mit daran befestigten Zinken (54) umfasst,
einem den Aufnehmerrotor (34) enthaltenden Gehäuse (32) mit Abstreifern (56), zwischen denen langgestreckte Zwischenräume (58) verbleiben, durch die sich die radial äußeren Bereiche der Zinken (54) über einen Teil der Kreisbahn der Zinkenträger (76) nach außen erstrecken,
und einer in zwei Drehrichtungen drehbar antreibbaren Antriebswelle (80) zum Antrieb der Zinkenträger (76) auf der Kreisbahn,
**dadurch gekennzeichnet, dass** die Zinkenträger (76) zwischen zwei Endstellungen um ihre Längsachse schwenkbar gelagert und abhängig von der Drehrichtung der Antriebswelle (80) zwischen den Endstellungen beweglich sind.

2. Gutaufnehmer (20) nach Anspruch 1, **dadurch gekennzeichnet, dass** die Zinkenträger (76) zwischen den Endstellungen frei schwenkbar gelagert und aufgrund der auf die Zinken (54) wirkenden Kraft, die von der Drehrichtung der Antriebswelle (80) abhängt, zwischen den Endstellungen beweglich sind.

3. Gutaufnehmer (20) nach Anspruch 2, **dadurch gekennzeichnet, dass** die Zinkenträger (76) drehbar an mit der Antriebswelle (80) antriebsverbundenen Halterungen (70) gelagert sind und dass der Schwenkbereich der Zinkenträger (76) zwischen den Endstellungen durch einen oder mehrere direkt oder indirekt mit den Halterungen (70) verbundene Nocken (82) oder Anschläge begrenzt ist.

4. Gutaufnehmer (20) nach Anspruch 3, **dadurch gekennzeichnet, dass** die Nocken (82) mit einer mittigen, zwei Halterungen (70) verbindenden Welle (68) verbunden sind.

5. Gutaufnehmer (20) nach einem der Ansprüche 1 bis 4, **dadurch gekennzeichnet, dass** die Zinkenträger (76) untereinander durch einen frei drehbaren Kupplungsring (86) verbunden sind, der die Drehbewegungen der Zinkenträger (76) um ihre Achsen miteinander koppelt.

6. Gutaufnehmer (20) nach Anspruch 5, **dadurch gekennzeichnet, dass** der Kupplungsring (86) wenigstens eine Endstellung eines Zinkenträgers (76) um seine Achse definiert.

7. Gutaufnehmer (20) nach Anspruch 5 oder 6, **dadurch gekennzeichnet, dass** der Zinkenträger (76) mit einem Element, das mit dem Zinkenträger (76) verbunden oder Teil davon ist, insbesondere einem zu seiner Längsachse parallel zur Längsachse des Zinkenträgers (76) ausgerichteten Stift (90) verbunden ist, das in einen Schlitz (88) oder ein Langloch des Kupplungsrings (86) eingreift.

8. Gutaufnehmer (20) nach einem der Ansprüche 1 bis 7, **dadurch gekennzeichnet, dass** der Aufnehmerrotor (34) in einer ersten Drehrichtung der Antriebswelle (80) oberschlächtig fördert, wobei die Zinken (54) am oberen, rückwärtigen Ende der langgestreckten Zwischenräume (58) zumindest näherungsweise senkrecht zu den dort liegenden Bereichen der Abstreifer (56) orientiert sind, und dass die Zinken (54) bei der zweiten Drehrichtung der Antriebswelle (80) am unteren, rückwärtigen Ende der langgestreckten Zwischenräume (58) zumindest näherungsweise senkrecht zu den dort liegenden Bereichen der Abstreifer (56) orientiert sind.

9. Landwirtschaftliche Erntemaschine (10), vorzugsweise in der Art eines Feldhäckslers, eines Ladewagens, eines Mähdreschers oder einer Ballenpresse, mit einem Gutaufnehmer (20) gemäß einem der Ansprüche 1 bis 8.

## Claims

1. Pick-up (20), having:
a pick-up rotor (34), which comprises a plurality of tine carriers (76) which can be moved along a circular path, are supported such that they can be rotated about their longitudinal axis and on which tines (54) are fastened,
a housing (32) that contains the pick-up rotor (34) and has strippers (56), between which there remain elongate intermediate spaces (58), through which the radially outer regions of the tines (54) extend outwards over a part of the circular path of the tine carriers (76),
and a driveshaft (80), which can be driven in rotation in two directions of rotation, for driving the tine carrier (76) on the circular path,
**characterized in that** the tine carriers (76) are mounted such that they can be pivoted about their longitudinal axis between two end positions and can be moved between the end positions in a manner dependent on the direction of rotation of the driveshaft (80).

2. Pick-up (20) according to Claim 1, **characterized in that** the tine carriers (76) are mounted such that they can pivot freely between the end positions and can be moved between the end positions on account of the force that acts on the tines (54) and depends on the direction of rotation of the driveshaft (80).

3. Pick-up (20) according to Claim 2, **characterized in that** the tine carriers (76) are mounted such that they can rotate on holders (70) that are drive-connected to the driveshaft (80), and **in that** the pivoting range of the tine carriers (76) between the end positions is limited by one or more protuberances (82) or stops connected directly or indirectly to the holders (70).

4. Pick-up (20) according to Claim 3, **characterized in that** the protuberances (82) are connected to a central shaft (68) that connects two holders (70).

5. Pick-up (20) according to one of Claims 1 to 4, **characterized in that** the tine carriers (76) are connected together by a coupling ring (86) that can rotate freely and couples together the rotational movements of the tine carriers (76) about their axes.

6. Pick-up (20) according to Claim 5, **characterized in that** the coupling ring (86) defines at least one end position of one tine carrier (76) about its axis.

7. Pick-up (20) according to Claim 5 or 6, **characterized in that** the tine carrier (76) is connected to an element which is connected to or is part of the tine carrier (76), in particular to a pin (90) that is oriented parallel to the longitudinal axis of the tine carrier (76) with respect to its longitudinal axis and engages in a slit (88) or a slot in the coupling ring (86).

8. Pick-up (20) according to one of Claims 1 to 7, **characterized in that** the pick-up rotor (34) conveys in an overshot manner in a first direction of rotation of the driveshaft (80), wherein the tines (54) are oriented, at the upper, rear end of the elongate intermediate spaces (58), at least approximately perpendicular to the regions located there of the strippers (56), and **in that**, in the case of the second direction of rotation of the driveshaft (80), the tines (54) are oriented, at the lower, rear end of the elongate intermediate spaces (58), at least approximately perpendicular to the regions located there of the strippers (56).

9. Agricultural harvester (10), preferably of the forage harvester, self-loading wagon, combine or baler type, having a pick-up (20) according to one of Claims 1 to 8.

## Revendications

1. Récepteur de marchandise (20) comprenant :
un rotor récepteur (34), qui comprend plusieurs porte-dents (76) déplaçables le long d'une trajectoire circulaire, soutenus de façon rotative autour de leur axe longitudinal, avec des dents (54) fixées dessus,
un boîtier (32) contenant le rotor récepteur (34) avec des racleurs (56), entre lesquels restent des interstices (58) étirés en longueur, par lesquels les zones radialement extérieures des dents (54) s'étendent vers l'extérieur sur une partie de la trajectoire circulaire des porte-dents (76),
et un arbre d'entraînement (80) pouvant être entraîné de façon rotative dans deux sens de rotation pour l'entraînement des porte-dents (76) sur la trajectoire circulaire,
**caractérisé en ce que** les porte-dents (76) sont montés entre deux positions extrêmes de façon à pouvoir basculer autour de leur axe longitudinal et sont mobiles en fonction du sens de rotation de l'arbre d'entraînement (80) entre les positions extrêmes.

2. Récepteur de marchandise (20) selon la revendication 1, **caractérisé en ce que** les porte-dents (76) sont montés de façon à pouvoir basculer librement entre les positions extrêmes et sont mobiles entre les positions extrêmes sous l'effet de la force agissant sur les dents (54), qui dépend du sens de rotation de l'arbre d'entraînement (80).

3. Récepteur de marchandise (20) selon la revendication 2, **caractérisé en ce que** les porte-dents (76) sont montés de façon rotative sur des supports (70) reliés par entraînement à l'arbre d'entraînement (80) et **en ce que** la zone de pivotement des porte-dents (76) est limitée entre les positions extrêmes par une ou plusieurs cames (82) ou butées reliées directement ou indirectement aux supports (70).

4. Récepteur de marchandise (20) selon la revendication 3, **caractérisé en ce que** les cames (82) sont reliées à un arbre (68) central, reliant deux supports (70).

5. Récepteur de marchandise (20) selon l'une quelconque des revendications 1 à 4, **caractérisé en ce que** les porte-dents (76) sont reliés entre eux par une bague d'accouplement (86) pouvant tourner librement, laquelle bague couple les mouvements de rotation des porte-dents (76) autour de leurs axes les uns avec les autres.

6. Récepteur de marchandise (20) selon la revendication 5, **caractérisé en ce que** la bague d'accouplement (86) définit au moins une position extrême d'un porte-dents (76) autour de son axe.

7. Récepteur de marchandise (20) selon la revendication 5 ou 6, **caractérisé en ce que** le porte-dents (76) est relié à un élément, qui est relié au porte-dents (76) ou une partie de celui-ci, en particulier une broche (90) orientée par rapport à son axe longitudinal parallèlement à l'axe longitudinal du porte-dents (76), lequel élément s'engage dans une fente (88) ou un trou oblong de la bague d'accouplement (86).

8. Récepteur de marchandise (20) selon l'une quelconque des revendications 1 à 7, **caractérisé en ce que** le rotor récepteur (34) transporte, mû en dessus, dans un premier sens de rotation de l'arbre d'entraînement (80), les dents (54) sur l'extrémité supérieure, côté arrière, des interstices (58) étirés en longueur étant orientées au moins approximativement perpendiculairement aux zones situées à cet endroit des racleurs (56), et **en ce que** les dents (54) sont orientées, dans le second sens de rotation de l'arbre d'entraînement (80), sur l'extrémité inférieure, côté arrière, des interstices (58) étirés en longueur au moins approximativement perpendiculairement aux zones situées à cet endroit des racleurs (56).

9. Moissonneuse (10) agricole, de préférence sous la forme d'une ramasseuse-hacheuse, d'une chargeuse, d'une moissonneuse-batteuse ou d'un presse-balles, équipée d'un récepteur de marchandise (20) selon l'une quelconque des revendications 1 à 8.
